# EUROPEAN PATENT APPLICATION

(11) **EP 4 751 678 A1**
(43) Date of publication of application: **03.06.2026**
(21) Application number: 25215215.2
(22) Date of filing: 12.11.2025
(51) Int. Cl.: A61C 1/18, A61C 1/14

(54) **DENTAL HANDPIECE**

(30) Priority: 29.11.2024 JP 2024208907
(71) Applicant: J. MORITA MANUFACTURING CORPORATION, Fushimi-ku, Kyoto-shi, Kyoto 6128533 (JP)
(72) Inventor: NORICHIKA, Takaaki, Kyoto, 612-8533 (JP); MURATA, Tomoya, Kyoto, 612-8533 (JP); MIKAMI, Shinji, Kyoto, 612-8533 (JP)
(74) Representative: Müller Hoffmann & Partner

(57) **Abstract**

There is provided a dental handpiece comprising a configuration to suppress heat generation per se by a simple configuration. According to the present disclosure, a dental handpiece is a dental handpiece configured to drive a cutting tool to rotate the cutting tool. The dental handpiece includes: a head configured to accommodate the cutting tool rotatably; a first bearing provided on an insertion side on which the cutting tool is inserted into the head, and configured to hold the cutting tool rotatably; a second bearing provided on a side opposite to the insertion side of the head and configured to hold the cutting tool rotatably; and a driving mechanism configured to rotate the cutting tool held by the first and second bearings. The first and second bearings each have a cage to hold balls, each cage being formed of a different material.

## Description

### RELATED APPLICATIONS

This nonprovisional application is based on Japanese Patent Application No. 2024-208907 filed on November 29, 2024 with the Japan Patent Office.

### BACKGROUND

### Field

The present disclosure relates to a dental handpiece.

### Description of the Background Art

A dental handpiece cuts a tooth by rotating at high speed while holding a cutting tool by a holding mechanism provided inside a head. The cutting tool is held by the holding mechanism, and the holding mechanism is rotatably held inside the head by a bearing.

Japanese Patent No. 6420073 describes that a cutting tool and a component holding the cutting tool rotate at a high speed of 200,000 revolutions per minute and may abnormally generate heat or cause a similar problem.

### SUMMARY

However, Japanese Patent No. 6420073 or the like only describes that a dental handpiece is provided with a mechanism to sense generated heat, and the document is silent on any configuration to suppress heat generation per se. Furthermore, as the dental handpiece described in Japanese Patent No. 6420073 or the like requires the mechanism to sense generated heat, the dental handpiece will have a complicated configuration and hence an increased manufacturing cost.

The present disclosure has been made in view of the above issue, and an object of the present disclosure is to provide a dental handpiece having a configuration to suppress heat generation per se by a simple configuration.

The presently disclosed dental handpiece is a dental handpiece configured to drive a cutting tool to rotate the cutting tool. The dental handpiece comprises: a head configured to accommodate the cutting tool rotatably; a first bearing provided on an insertion side on which the cutting tool is inserted into the head, and configured to hold the cutting tool rotatably; a second bearing provided on a side opposite to the insertion side of the head and configured to hold the cutting tool rotatably; and a driving mechanism configured to rotate the cutting tool held by the first and second bearings. The first and second bearings each have a cage to hold balls, each cage being formed of a different material.

The foregoing and other objects, features, aspects and advantages of the present disclosure will become apparent from the following detailed description of the present disclosure when taken in conjunction with the accompanying drawings.

### BRIEF DESCRIPTION OF THE DRAWINGS

Fig. 1 shows an external appearance of a dental handpiece according to an embodiment.
Fig. 2 is a diagram for illustrating a structure of an interior of a head.
Fig. 3 is a plan view of a bearing.
Fig. 4 is an exploded perspective view of the bearing.
Fig. 5 is a diagram for illustrating an evaluation of a cage in durability against autoclaving.
Fig. 6 is a diagram for illustrating another evaluation of the cage in durability against autoclaving.
Fig. 7 shows combinations of materials of cages on front and rear sides.

### DESCRIPTION OF THE PREFERRED EMBODIMENTS

Embodiments of the present disclosure will now be described in detail with reference to the drawings. In the figures, identical or equivalent components are identically denoted and will not be described repeatedly.

### [Configuration of Dental Handpiece]

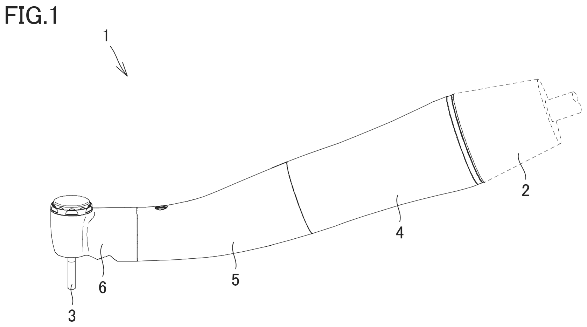

Fig. 1 shows an external appearance of a dental handpiece 1 according to an embodiment. As shown in Fig. 1, dental handpiece 1 comprises a connection unit 2, a body 4, a neck 5 and a head 6. Connection unit 2, body 4, neck 5, and head 6 are disposed in this order in the longitudinal direction of dental handpiece 1 from one end side (or a proximal end side) toward the other end side (or a distal end side).

Connection unit 2 provided on the proximal end side of dental handpiece 1 in the longitudinal direction is a component configured to connect to a pipe that feeds driving air. Connection unit 2 is configured to be detachably attachable to the proximal end side of dental handpiece 1 and is connected to the proximal end side of dental handpiece 1 to supply head 6 with driving air. Head 6 provided on the distal end side of dental handpiece 1 in the longitudinal direction is a component configured to accommodate cutting tool 3 rotatably. Cutting tool 3 is configured to rotate at a high speed to be capable of cutting a tooth.

In the present embodiment, dental handpiece 1 is driven by a driving mechanism, which is an air turbine provided in head 6 and driving air supplied to the air turbine. That is, dental handpiece 1 is an air turbine handpiece configured to drive cutting tool 3 by the air turbine to rotate the cutting tool. The driving mechanism of dental handpiece 1 is not limited to an air turbine or the like and may instead be a motor. That is, dental handpiece 1 may be a motor handpiece configured to drive cutting tool 3 by a motor to rotate the cutting tool.

Body 4 is configured to be detachably attachable to connection unit 2. Body 4 is disposed on the proximal end side of dental handpiece 1. Body 4 gradually decreases in diameter toward the distal end side of dental handpiece 1. Body 4 includes a generally cylindrical housing. Body 4 is a component gripped by a user such as an operator and a maintenance worker.

Neck 5 bends upwards at a middle portion in the longitudinal direction when the operator holds dental handpiece 1 with cutting tool 3 downward, head 6 upward, and body 4 horizontal. Neck 5 gradually decreases in diameter toward the distal end side of dental handpiece 1. Neck 5 includes a generally cylindrical housing.

Head 6 is connected to body 4 via neck 5. Head 6 includes a generally cylindrical housing having an axial direction in a direction substantially orthogonal to the longitudinal direction of neck 5 (i.e., a vertical direction in Fig. 1).

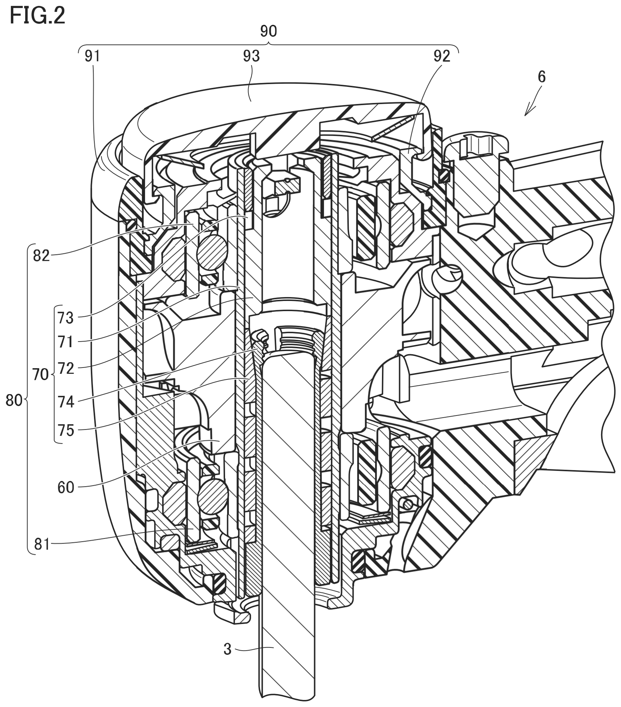

Fig. 2 is a cross section for illustrating an internal structure of head 6. Referring to Fig. 2, head 6 includes an air turbine 60, a holding mechanism 70, a rotation mechanism 80, and a releasing mechanism 90. Cutting tool 3 is held by holding mechanism 70, and holding mechanism 70 is held inside the head by rotation mechanism 80. Air turbine 60 is fixed to holding mechanism 70, and when the air turbine receives the driving air supplied through connection unit 2 and thus rotates, the air turbine rotates cutting tool 3 held by holding mechanism 70.

Holding mechanism 70 holds cutting tool 3. Holding mechanism 70 includes a rotary cylinder 71, a slide ring 72, a ring holder 73, a chuck 74, and an elastic body 75.

Rotary cylinder 71 is configured to be capable of receiving cutting tool 3. Chuck 74 is configured to detachably hold cutting tool 3 inserted in rotary cylinder 71. Elastic body 75 is configured to bias chuck 74 to engage chuck 74 with cutting tool 3. That is, holding mechanism 70 can attach cutting tool 3 by biasing chuck 74 by elastic body 75 to engage with cutting tool 3 inserted in rotary cylinder 71.

Slide ring 72 is accommodated in head 6 on a side rearward of elastic body 75 (that is, a side opposite to the insertion side of head 6), and can be pressed downward to compress elastic body 75 toward a front side of head 6 (or the insertion side on which cutting tool 3 is inserted into head 6). Compressing elastic body 75 by slide ring 72 toward the front side of head 6 can reduce a force applied by elastic body 75 to bias chuck 74, and can thus remove cutting tool 3 from chuck 74. That is, holding mechanism 70 having slide ring 72 pressed downward allows removal of cutting tool 3 inserted in rotary cylinder 71.

Ring holder 73 has a generally cylindrical shape and is provided in head 6 at a location on a side rearward of slide ring 72. Ring holder 73 can positionally regulate cutting tool 3 when cutting tool 3 is attached.

Rotation mechanism 80 includes a bearing 81 (a first bearing) provided on the insertion side on which cutting tool 3 is inserted into head 6 (or the front side), and a bearing 82 (a second bearing) provided on the side opposite to the insertion side of head 6 (or the rear side).
Bearings 81 and 82 hold cutting tool 3 rotatably via holding mechanism 70. If it is unnecessary to detachably attach cutting tool 3 to head 6, bearings 81 and 82 may directly hold cutting tool 3 rotatably.

Releasing mechanism 90 is a mechanism configured to change a state of holding mechanism 70 into a releasing state allowing cutting tool 3 to be removed from holding mechanism 70. Releasing mechanism 90 includes a cap 91, a cap ring 92, and a push cap 93. Cap 91 is attached to the rear side of head 6, and push cap 93 is attached to cap 91 by cap ring 92 in a downwardly pressable state. When push cap 93 is pressed toward the front side of head 6, push cap 93 presses slide ring 72 of holding mechanism 70 downward to bring holding mechanism 70 into the releasing state.

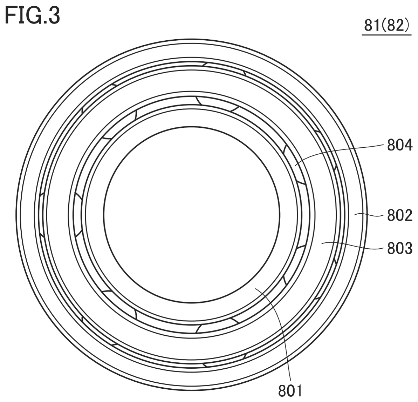

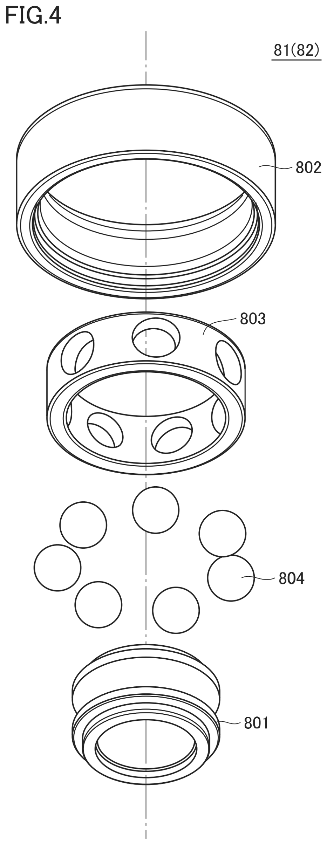

Rotation mechanism 80, or bearings 81 and 82, will now be described more specifically with reference to the drawings. Fig. 3 is a plan view of bearings 81 and 82. Fig. 4 is an exploded perspective view of bearings 81 and 82. Bearing 81, which is provided on the front side of head 6 and bearing 82, which is provided on the rear side of head 6, as will be described below, will be described as being identical in structure and equal in size, except that the bearings have balls held by cages of different materials. Herein, bearings 81 and 82 being equal in size mean that, for example, bearings 81 and 82 each have an equal difference in diameter between an outer ring and an inner ring. Bearings 81 and 82 may have their respective cages different at least in material, and may have their respective cages different in structure and size.

Bearings 81 and 82 each include an inner ring 801, an outer ring 802, a cage 803, and a plurality of balls 804. The plurality of balls 804 are disposed between inner ring 801 and outer ring 802. Bearings 81 and 82 each have cage 803 disposed between inner ring 801 and outer ring 802. Inner ring 801, outer ring 802, cage 803, and the plurality of balls 804 are not particularly limited in material and may be formed of metal, resin, or the like.

Bearings 81 and 82 are bearings provided to hold rotary cylinder 71 that receives cutting tool 3 rotatably. Bearings 81 and 82 rotate at a high speed of several hundreds of thousands of revolutions per minute, and will generate heat due to frictional heat when damaged. Accordingly, bearings 81 and 82 used in dental handpiece 1 will require durability so as not to break even when used for a prescribed period of time.

Furthermore, of the components constituting bearings 81 and 82, cage 803 is more damageable than the other components, and when cage 803 is made of resin, in particular, bearings 81 and 82 will depend on cage 803 in durability. That is, bearings 81 and 82 used in dental handpiece 1 will require cage 803 to have durability.

After dental handpiece 1 is used, it is autoclaved (for example at 135°C for 10 minutes) for sterilization. Therefore, whenever the handpiece is autoclaved, bearings 81 and 82, cage 803 made of resin in particular, may further deteriorate. Bearings 81 and 82 used in dental handpiece 1 will require durability so that the bearings are not broken even when the dental handpiece is autoclaved a prescribed number of times and used for a prescribed period of time. That is, bearings 81 and 82 will require durability against autoclaving.

Dental handpiece 1 employs two bearings 81 and 82 to rotate cutting tool 3. When bearings 81 and 82 are damaged and generate heat, an amount of heat generated when bearings 81 and 82 are both damaged is larger than that of heat generated when one of bearings 81 and 82 is damaged. Accordingly, reducing a risk of damaging both bearings 81 and 82 at the same timing can suppress generation per se of heat in a large amount. Accordingly, dental handpiece 1 has bearings 81 and 82 with balls held by their respective cages 803 each formed of a different material to reduce a risk of damaging both bearings 81 and 82 at the same timing.

Furthermore, when dental handpiece 1 is examined in structure, bearing 81 provided on the front side and bearing 82 provided on the rear side of head 6 bear different loads while cutting tool 3 cuts a tooth. Bearing 82 provided on the rear side of head 6 farther from the cutting edge of cutting tool 3 bears a larger load than bearing 81 provided on the front side of head 6 closer to the cutting edge of cutting tool 3. Accordingly, it is necessary that bearing 82 provided on the rear side of head 6 be less breakable than bearing 81 provided on the front side of head 6, and it is preferable that bearing 82 be higher in durability against autoclaving than bearing 81. In particular, it is preferable that cage 803 of bearing 82 be higher in durability against autoclaving than cage 803 of bearing 81. Specifically, it is preferable to use polyamideimide (PAI) resin for cage 803 of bearing 81 and polyimide (PI) resin for cage 803 of bearing 82.

For dental handpiece 1, water injection is provided generally on the front side of head 6 for the purpose of cooling cutting tool 3. Therefore, even when bearing 81 provided on the front side is damaged and generates heat, the injected water can cool the front side of head 6.

In contrast, when bearing 82 provided on the rear side of head 6 is damaged and generates heat, it is not expected that the bearing is cooled by the injected water. Accordingly, it is necessary that bearing 82 that cannot be cooled as it is provided on the rear side of head 6 be less breakable than bearing 81 provided on the front side of head 6, and it is preferable that bearing 82 be higher in durability against autoclaving than bearing 81. In particular, it is preferable that cage 803 of bearing 82 be higher in durability against autoclaving than cage 803 of bearing 81.

Durability of bearings 81 and 82 against autoclaving is a performance of the bearings that prevents the bearings from being broken even when the dental handpiece is autoclaved a prescribed number of times and used for a prescribed period of time. Bearing 82 being higher in durability against autoclaving than bearing 81 means that bearing 82 takes a longer period of time before it is broken than bearing 81 does when the dental handpiece is autoclaved a given number of times. The bearing 82 cage 803 being higher in durability against autoclaving than the bearing 81 cage 803 means that the bearing 82 cage 803 takes a longer period of time before it is broken than the bearing 81 cage 803 does when the dental handpiece is autoclaved a given number of times. In order to evaluate bearings 81 and 82 in durability against autoclaving, for example, the dental handpiece may actually be autoclaved 1,000 times to measure a period of time elapsing before each bearing is broken, although this manner of evaluation consumes time.

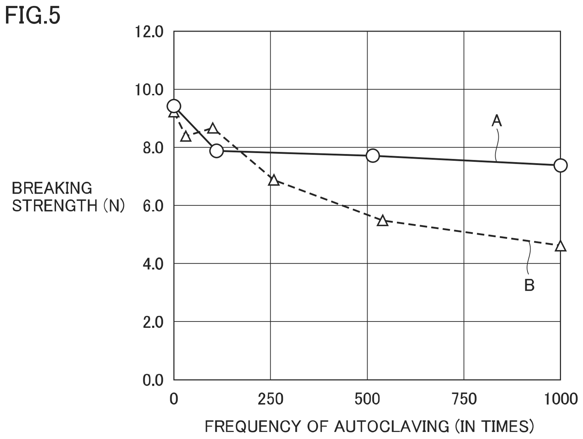

Accordingly, durability against autoclaving is evaluated by comparing cage 803 in breaking strength, anti-fatigue strength, and the like. An index for evaluation in durability is not limited to the breaking strength, anti-fatigue strength and the like of cage 803, and a different index such as impact resistance may be used. Fig. 5 is a diagram for illustrating an evaluation of cage 803 in durability against autoclaving. Fig. 5 is a graph to compare cage 803 of polyamideimide (PAI) resin and cage 803 of polyimide (PI) resin in breaking strength with respect to how many times the dental handpiece is autoclaved. In Fig. 5, the axis of abscissas represents how many times the dental handpiece is autoclaved, and the axis of ordinates represents breaking strength (with N serving as a unit). The breaking strength of cage 803 is a force exerted to cage 803 in its radial direction to break the cage.

As indicated by a line B, cage 803 of polyamideimide (PAI) resin has a breaking strength decreasing as the dental handpiece is autoclaved more frequently. In contrast, as indicated by a line A, cage 803 of polyimide (PI) resin does not have a breaking strength changed so much even when the dental handpiece is autoclaved more frequently. For example, when autoclaving is performed 1,000 times, cage 803 of polyamideimide (PAI) resin has a breaking strength of 4.6 N, whereas cage 803 of polyimide (PI) resin has a breaking strength of 7.4 N. Cage 803 of polyimide (PI) resin has a breaking strength of about 1.6 times that of cage 803 of polyamideimide (PAI) resin. Thus, from the evaluation of cage 803 through breaking strength, it is found that cage 803 of polyimide (PI) resin is higher in durability against autoclaving than cage 803 of polyamideimide (PAI) resin.

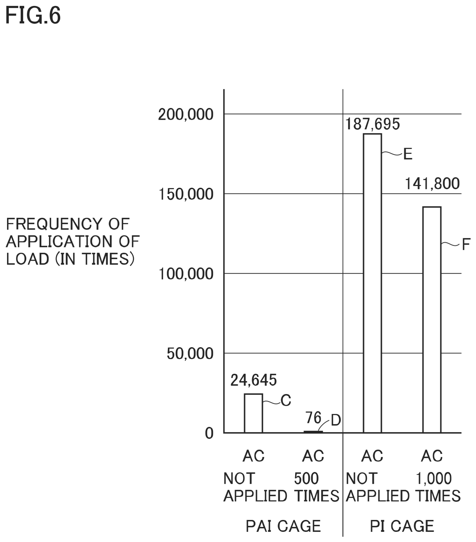

Fig. 6 is a diagram for illustrating another evaluation of cage 803 in durability against autoclaving. Fig. 6 is a graph showing a comparison in anti-fatigue strength between cage 803 of polyamideimide (PAI) resin and cage 803 of polyimide (PI) resin. Fig. 6 represents anti-fatigue strength when the dental handpiece is autoclaved 0 (zero) times and that when the dental handpiece is autoclaved 500 times or 1,000 times. An anti-fatigue strength of cage 803 is represented by how many times a load (e.g., of 4 N) is repeatedly applied to cage 803 in its radial direction to break the cage. Accordingly, in Fig. 6, the axis of ordinates represents how many times the load is applied to break the cage.

Cage 803 of polyamideimide (PAI) resin has an anti-fatigue strength of 24,645 times when the dental handpiece is autoclaved 0 (zero) times, as indicated by a bar C, and has an anti-fatigue strength of 76 times when the dental handpiece is autoclaved 500 times, as indicated by a bar D. In contrast, cage 803 of polyimide (PI) resin has an anti-fatigue strength of 187,695 times when the dental handpiece is autoclaved 0 (zero) times, as indicated by a bar E, and has an anti-fatigue strength of 141,800 times when the dental handpiece is autoclaved 1,000 times, as indicated by a bar F. Although how many times autoclaving is performed increases from 500 times to 1,000 times, cage 803 of polyamideimide (PAI) resin has an anti-fatigue strength of 76 times, whereas cage 803 of polyimide (PI) resin has an anti-fatigue strength of 141,800 times. Cage 803 of polyimide (PI) resin has an anti-fatigue strength of about 1,865 times that of cage 803 of polyamideimide (PAI) resin. Thus, the evaluation of cage 803 through anti-fatigue strength also indicates that cage 803 of polyimide (PI) resin is higher in durability against autoclaving than cage 803 of polyamideimide (PAI) resin.

That is, in view of durability against autoclaving, it is preferable to use polyamideimide (PAI) resin for cage 803 of bearing 81 provided on the front side of head 6 and use polyimide (PI) resin for cage 803 of bearing 82 provided on the rear side of head 6. Polyether ether ketone (PEEK) resin is known as a material higher in durability against autoclaving than polyamideimide (PAI) resin. Accordingly, in view of durability against autoclaving, polyamideimide (PAI) resin may be used for cage 803 of bearing 81 provided on the front side of head 6, and polyether ether ketone (PEEK) resin may be used for cage 803 of bearing 82 provided on the rear side of head 6.

When polyimide (PI) resin and polyether ether ketone (PEEK) resin are compared in durability against autoclaving, polyimide (PI) resin is higher than polyether ether ketone (PEEK) resin. Accordingly, in view of durability against autoclaving, polyether ether ketone (PEEK) resin may be used for cage 803 of bearing 81 provided on the front side of head 6, and polyimide (PI) resin may be used for cage 803 of bearing 82 provided on the rear side of head 6.

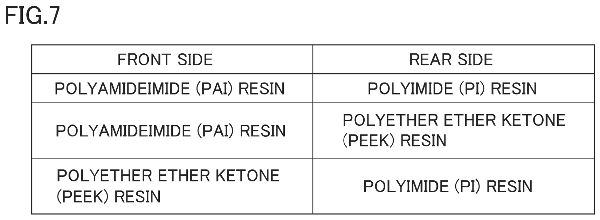

Fig. 7 is a table showing combinations of materials for cages 803 on the front and rear sides. The Fig. 7 table has a left column indicating names of materials for cage 803 of bearing 81 provided on the front side of head 6, and a right column indicating names of materials for cage 803 of bearing 82 provided on the rear side of head 6 corresponding to the left column. Fig. 7 indicates the materials by way of example, and a material used for cage 803 of bearing 81 provided on the front side of head 6 and a material used for cage 803 of bearing 82 provided on the rear side of head 6 may be determined in view of durability against autoclaving.

### (Modification)

It has been described that polyamideimide (PAI) resin is used for cage 803 of bearing 81 provided on the front side of head 6 and polyimide (PI) resin is used for cage 803 of bearing 82 provided on the rear side of head 6. This is not exclusive, however, and polyamideimide (PAI) resin may be used for at least one of inner ring 801, outer ring 802, and ball 804 of bearing 81, and polyimide (PI) resin may be used for at least one of inner ring 801, outer ring 802, and ball 804 of bearing 82.

It has been described that polyamideimide (PAI) resin is used for cage 803 of bearing 81 provided on the front side of head 6, and polyether ether ketone (PEEK) resin is used for cage 803 of bearing 82 provided on the rear side of head 6. This is not exclusive, however, and polyamide imide (PAI) resin may be used for at least one of inner ring 801, outer ring 802, and ball 804 of bearing 81, and polyether ether ketone (PEEK) resin may be used for at least one of inner ring 801, outer ring 802, and ball 804 of bearing 82.

It has been described that polyether ether ketone (PEEK) resin is used for cage 803 of bearing 81 provided on the front side of head 6, and polyimide (PI) resin is used for cage 803 of bearing 82 provided on the rear side of head 6. This is not exclusive, however, and polyether ether ketone (PEEK) resin may be used for at least one of inner ring 801, outer ring 802, and ball 804 of bearing 81, and polyimide (PI) resin may be used for at least one of inner ring 801, outer ring 802, and ball 804 of bearing 82.

Although embodiments of the present disclosure have been described, it should be understood that the embodiments disclosed herein are illustrative and non-restrictive in any respect. The scope of the present disclosure is defined by the terms of the claims and intended to encompass any modification that falls within the meaning and scope equivalent to the terms of the claims.

## Claims

1. A dental handpiece configured to drive a cutting tool to rotate the cutting tool, the dental handpiece comprising:
a head configured to accommodate the cutting tool rotatably;
a first bearing provided on an insertion side on which the cutting tool is inserted into the head, and configured to hold the cutting tool rotatably;
a second bearing provided on a side opposite to the insertion side of the head and configured to hold the cutting tool rotatably; and
a driving mechanism configured to rotate the cutting tool held by the first and second bearings,
the first and second bearings each having a cage to hold balls, each cage being formed of a different material.

2. The dental handpiece according to claim 1, wherein
the first and second bearings each have the cage equally in size.

3. The dental handpiece according to claim 1 or 2, wherein
the first and second bearings each have an equal difference in diameter between an outer ring and an inner ring.

4. The dental handpiece according to any one of claims 1 to 3, wherein
the second bearing is higher in durability against autoclaving than the first bearing.

5. The dental handpiece according to any one of claims 1 to 4, wherein
the cage of the second bearing is higher in durability against autoclaving than the cage of the first bearing.

6. The dental handpiece according to claim 5, wherein
the cage is evaluated in durability against autoclaving based on a breaking strength of the cage with reference to how many times autoclaving is performed.

7. The dental handpiece according to any one of claims 1 to 6, wherein
at least the cage of the first bearing is polyamideimide, PAI, resin and at least the cage of the second bearing is polyimide, PI, resin.

8. The dental handpiece according to any one of claims 1 to 6, wherein
at least the cage of the first bearing is polyamideimide, PAI, resin and at least the cage of the second bearing is polyether ether ketone, PEEK, resin.

9. The dental handpiece according to any one of claims 1 to 6, wherein
at least the cage of the first bearing is polyether ether ketone, PEEK, resin and at least the cage of the second bearing is polyimide, PI, resin.
